# EUROPEAN PATENT APPLICATION

(11) **EP 2 207 112 A1**
(43) Date of publication of application: **14.07.2010**
(21) Application number: 09305026.8
(22) Date of filing: 12.01.2009
(51) Int. Cl.: G06F 17/30

(54) **A method of retaining item information, corresponding device, storage means, and software program therefor**

(71) Applicant: Alcatel Lucent, 75008 Paris (FR)
(72) Inventor: The designation of the inventor has not yet been filed
(74) Representative: Brose, Gerhard

(57) **Abstract**

A method of retaining item information, the method comprising the steps of collecting (110) metadata about a plurality of items, wherein the step of collecting (110) the metadata comprises collecting (101,102) information on at least one of the following: a circumstance of a creation of at least one of the plurality of items and a circumstance of an access to the at least one of the plurality of items.

## Description

The invention relates to a method of retaining item information according to the preamble of claim 1, a programmable device according to the preamble of claim 9, storage means according to the preamble of claim 10, and a software program according to the preamble of claim 11.

In computing, a search engine is an information retrieval system designed to help find information stored on a computer system. Search engines help to minimize the time required to find information and the amount of information which must be consulted, akin to other techniques for managing information overload. One example of a search engine is a Web search engine which searches for information on the World Wide Web.

Search engines provide an interface to a group of items that enables users to specify criteria about an item of interest and have the engine find the matching items. The criteria are referred to as a search query. In the case of text search engines, the search query is typically expressed as a set of words that identify the desired concept that one or more documents may contain. There are several styles of search query syntax that vary in strictness. Whereas some text search engines require users to enter two or three words separated by white space, other search engines may enable users to specify entire documents, pictures, sounds, and various forms of natural language. Some search engines apply improvements to search queries to increase the likelihood of providing a quality set of items through a process known as query expansion.

To provide a set of matching items that are sorted according to some criteria quickly, a search engine will typically collect metadata about the group of items under consideration beforehand through a process referred to as indexing. The index typically requires a smaller amount of computer storage, which is why some search engines only store the indexed information and not the full content of each item, and instead provide a method of navigating to the items in the search engine result page. International Patent Publication No. WO 2007/064874 provides an example of this approach. Alternatively, the search engine may store a copy of each item in a cache so that users can see the state of the item at the time it was indexed or for archive purposes or to make repetitive processes work more efficiently and quickly.

Other types of search engines do not store an index. So-called real-time search engines, also known as crawlers or spiders, may collect and assess items at the time of the search query, dynamically considering additional items based on the contents of a starting item known as a seed. The article "Accessibility of information on the web", published in "Nature", Volume 400, on July 8, 1999, gives various examples of such systems.

A downside of all aforementioned search engines is their lack of usability or, more specifically, are the constraints imposed by their index. Accordingly, the limited set of criteria available to end users for designing their search queries often leads to inappropriate or undesired search results. It is thus an object of the invention to provide a user-friendly approach to retaining item information that allows for an intuitive construction of search criteria.

This object is achieved by a method according to claim 1, a programmable device according to claim 9, storage means according to claim 10, and a software program according to claim 11.

A main idea of the invention is to take into account, in addition to established search criteria such as title or author in case of a document, circumstances of the creation or prior use of an item.

Further developments of the invention can be gathered from the dependent claims and the following description.

In the following the invention will be explained further making reference to the attached drawing.

To retain item information according to an embodiment of the invention, metadata is collected about a plurality of items. This step comprises collecting information on a circumstance of a creation of and/or an access to at least one of the plurality of items.

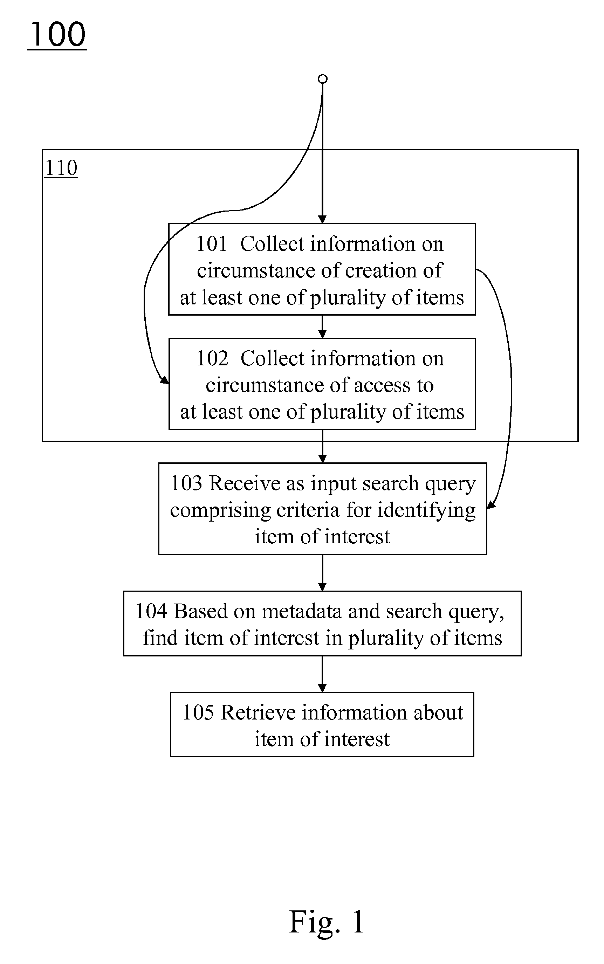

Fig. 1 shows a flowchart depicting a method according to an embodiment of the invention.

In the following, a method according to the invention is elucidated by way of example, referencing Fig. 1.

The flowchart 100 of Fig. 1 comprises a first step 101, a second step 102, a third step 103, a fourth step 104, and a fifth step 105, mutually connected by arrows indicating a preferred order of execution. An indexing phase 110 comprises the first step 101 and the second step 102.

To allow its execution by means of a programmable device, the method of Fig. 1 is implemented in the form of a software program.

In the indexing phase 110, the software program collects metadata about a plurality of items. By way of example, in the embodiment at hand, the plurality of items takes the form of a group of digital documents. In the case of text documents, the set of texts thus constituted may also be called a corpus. Note however that the group of digital documents may likewise contain still images, videos, e-mails, presentation slides, or other document types established in personal computing. These digital documents may be stored on arbitrary storage media such as, inter alia, magnetic or optical disks locally attached to the programmable device, or a storage area network (SAN) to which the programmable device is coupled.

To collect the metadata required, the software program performs, depending on a preference of an end user or the availability of pertinent information, the first step 101, the second step 102, or both the first step 101 and the second step 102.

In the first step 101, the software program collects information on a circumstance of a creation of at least one of the plurality of items, i.e., the group of digital documents. Such information may pertain to a geolocation of the creation of the digital document. In computing, by geolocation is meant the real-world geographic location of an Internet-connected computer, mobile device, website visitor, or other. To derive the geolocation in the given embodiment, the software program evaluates any or all of the Internet Protocol address, Media Access Control address, radio-frequency identification (RFID), wireless connection location, and Global Positioning System coordinates of the device where the document was originated. To facilitate this localization, the author may have disclosed other information upon creation of the digital document that the software program may take into account. For example, to obtain the geolocation for a particular Internet Protocol address, the software program makes use of the WHOIS protocol to retrieve the registrant's physical address.

Further information collected in the first step 101 pertains to specific incidents that occurred during the creation of the digital document. For example, if the digital document takes the form of a photograph, the software program may take note of the fact that the shot was taken on the date of an end user's birthday. Similarly, the software program may observe that a word processing document was created during the timeframe of a conference, which timeframe the respective author had marked accordingly in his personal calendar.

In the second step 102, the software program collects information on a circumstance of an access to the at least one of the group of digital documents. That information may pertain to such aspects as captured in the context of the first step 101, for example, a geolocation of the access. It may also pertain to more technical aspects such as the device employed when accessing the digital document, be it a portable computer, personal digital assistant (PDA), smartphone, or other. Lastly, the information gathered may relate to temporal aspects of previous access, such as a frequency of opening the digital document, or the overall time spent reading it on screen.

Note that, although the first step 101 and the second step 102 are preferably applied to each digital document in the group of digital documents, the availability of pertinent information may cause the software program to limit their execution to only a subset of the group of digital documents. Such limitation may also be imposed by constraints such as available processing or storage capacity of the programmable device on which the software program is implemented.

To facilitate a fast and accurate information retrieval in later stages of the software program execution, the software program uses the metadata collected in the indexing phase 110 to build an index of the group of documents. The persistent storage of the index on a suitable medium enables the software program to decouple the cost-intensive indexing phase from the sporadic task of finding a document, allowing for an improved response time to ad-hoc search queries submitted by end users.

To further balance the workload imposed on the programmable device, the software program at hand offloads the process of updating the index to periods of substandard resource utilization. To ensure the utmost synchronization between the index and underlying corpus, an alternative embodiment may trigger an update of the index upon each modification of one of the digital documents to which it refers. Such an embodiment would effectively trade off the time savings achieved during information retrieval via the index for an inevitable increase in time required for each document update.

To limit the size of the index and the number of results returned by search queries, the software program determines a so-called level of visibility for each digital document considered. This level of visibility depends on statistics on human interactions with the digital document at hand, such as when or how often it was last used. In response to the level of visibility falling short of a predefined threshold, such as a value configured by the end user, the software program removes the respective metadata from the index, resulting in the corresponding document being exempted from further search queries.

The assignment of a level of visibility to each digital document further serves to emulate the ability of the human brain to eliminate obsolete memories, avoiding eventual saturation. The mimicry of this behavior by the software program aids to meet the expectations of the end user when querying the index.

In the third step 103, the software program receives as input a search query comprising criteria for identifying a digital document of interest to an end user. To enable the end user to search based on conventional document attributes such as title, author, keyword, or language used, the software programs allows the end user to provide selected values for these attributes as search criteria. To leverage the circumstantial metadata collected in the indexing phase, the software program additionally allows for the use of search criteria pertaining to those circumstances, corresponding to natural-language queries such as for "the document I wrote during the WIPO conference" or "the photograph taken on my birthday". An additional benefit of this approach lies in its analogy to the operating mode of the human brain, which takes into account the environmental, cognitive, and emotional context of an item to memorize it. The embodiment of the invention thus supports the recollection of the end user by equipping her with appropriate tools to formulate a query according to any associations evoked by the document of interest.

In the fourth step 104, based on the metadata collected in the course of the indexing phase 110 and the search query received in the third step 103, the software program finds the digital document of interest in the group of documents. To be able to leverage a relational database management system (RDBMS) for maintaining the metadata, the software program makes use of the Structured Query Language (SQL) to retrieve the result set using the SQL SELECT statement. To further take into account the search query received in the third step 103, the criteria contained therein are translated into predicates for use with the SQL WHERE clause.

Finally, in the fifth step 105, the software program retrieves information about the document of interest found in the fourth step 104. Such information may comprise a file name, description, or preview of the document identified.

Although the software program is preferably executed on a local workstation of the end user, an alternative embodiment may take the form of a web service to enable remote users to access the software program. A web service, according to the World Wide Web Consortium (W3C), is construed to mean a software system designed to support interoperable machine-to-machine interaction over a network. In this case, the software program is executed on a system remote from the end user, which system effectively hosts the requested web service. To allow participants of the Internet to make use of the software program, the service requester and service provider may communicate by means of the Hypertext Transport Protocol (HTTP). In this case, the network takes the form of a TCP/IP network.

As opposed to performing all of the above-mentioned steps in the same software program, still another embodiment may be composed of a central memory manager in addition to a decentralized search interface to be made available on individual user terminals. This approach bears the additional advantage of balancing the workload imposed by the information retrieval between the user terminal and the memory manager. In addition to the search interface, the user terminal is equipped with an activity grabber for detecting human interactions with individual items. This activity grabber is coupled, for example, by means of a point-to-point connection or a computer network, to a statistics manager. The statistics manager in turn reports to a content management system (CMS) responsible for storing the resulting metadata. In addition, the CMS is coupled with a memory visibility evaluation module that serves to update the level of visibility for each item and purge the CMS accordingly.

If an end user submits a search query via the user terminal's search interface, the latter will forward the search query to a query expansion module responsible for formalizing the search query. This formalization may comprise, inter alia, the translation of natural language provided by the end user into SQL, thereby replacing any fuzzy criteria with corresponding value ranges or sets. The search query thus formalized is fed into an event association module which, having access to the complete contents of the CMS, further enhances the search query with semantic information and aids to interpret the end user's intention in the context of the metadata available.

To further refine and sort the list of results according to the relevance of its entries, the eventual results of the query are provided by the CMS to a result classifier module, which returns its output to the search interface residing on the user terminal. Finally, the search interface presents the search results thus prioritized and trimmed to the end user.

In this embodiment, the statistics manager, CMS, memory visibility evaluation module, query expansion module, event association module, and result classifier module jointly constitute the memory manager. Without contravening the spirit of the invention, yet another embodiment may make use of a deviating component architecture for reasons of workload balancing, response time optimization, or network topology.

The method is implemented in a preferred embodiment through or together with a software program written in e.g. Very high speed integrated circuit Hardware Description Language (VHDL) or C, C++, Java, or using another programming language, or implemented by one or more VHDL, C, C++, or Java processes or routines, or several software modules being executed on at least one hardware device. Alternatively, the method is implemented in hardware only, e.g. making use of an ASIC. The described embodiments are to be considered in all respects only as illustrative and not restrictive. Furthermore, the order of the steps for performing the invention is not critical, and as can be understood by those skilled in the art, the order may vary without departing from the scope of the invention.

The programmable device can be any kind of device which can be programmed including e.g. any kind of computer like a server or a personal computer, an FPGA, a processor, or the like, or any combination thereof, e.g. one processor and two FPGAs.

The storage means could be any kind of data repository in any storage medium such as a CD or disk, e.g. USB memory stick or any kind of memory, e.g. at least one RAM or ROM, or the like, or any combination thereof, e.g. one ROM and two RAMs, or two disks, etc.

The software program is a set of instructions which could have been created using JAVA, C, C++, HTML, LISP, or another programming language.

## Claims

1. A method of retaining item information, the method comprising the step of collecting (110) metadata about a plurality of items,
**characterized in that** the step of collecting (110) the metadata comprises collecting (101, 102) information on at least one of the following:
a circumstance of a creation of at least one of the plurality of items and
a circumstance of an access to the at least one of the plurality of items.

2. A method according to claim 1, **characterized in that** the method comprises the further steps of
receiving (103) as input a search query, the search query comprising criteria for identifying an item of interest,
based on the metadata and the search query, finding (104) the item of interest in the plurality of items, and
retrieving (105) information about the item of interest.

3. A method according to claim 1, **characterized in that** the step of collecting (110) the metadata comprises collecting information on at least one of the following:
a geolocation of the creation of the at least one of the plurality of items,
an incident during the creation of the at least one of the plurality of items,
a device used for the creation of the at least one of the plurality of items, and
an event in the course of which the at least one of the plurality of items was created.

4. A method according to claim 1, **characterized in that** the step of collecting (110) the circumstance of the creation comprises collecting information on at least one of the following:
a geolocation of the access to the at least one of the plurality of items,
a device used for the access to the at least one of the plurality of items,
a frequency of accessing the at least one of the plurality of items, and
a duration of accessing the at least one of the plurality of items.

5. A method according to claim 1, **characterized in that** the step of collecting (110) the circumstance of the access comprises building an index from at least part of the metadata, wherein the step of finding (104) the item of interest is further based on the index.

6. A method according to claim 5, **characterized in that** the method further comprises the steps of
collecting statistics on human interactions with the at least one of the plurality of items,
based on the statistics, determining a level of visibility of the at least one of the plurality of items, and
in response to the level of visibility falling short of a threshold, removing the metadata about the at least one of the plurality of items from the index.

7. A method according to claim 1, **characterized in that** the item of interest takes the form of a digital document and the step of retrieving (105) the information about the item of interest comprises retrieving a description of the digital document.

8. A method according to claim 7, **characterized in that** the step of receiving (103) the search query comprises receiving at least one of the following:
a title of the digital document,
an author of the digital document,
a keyword of the digital document, and
a language of the digital document.

9. A programmable device comprising storage means with a software program recorded thereon, the software program comprising instructions which, when executed on the device, cause the device to carry out the step of collecting (110) metadata about a plurality of items,
**characterized in that** the instructions, when executed on the device, further cause the device to collect (101, 102) information on at least one of the following:
a circumstance of a creation of at least one of the plurality of items and
a circumstance of an access to at least one of the plurality of items.

10. Storage means having a software program recorded thereon, the software program comprising instructions adapted to perform, when the program is executed on a programmable device, the step of collecting (110) metadata about a plurality of items,
**characterized in that** the instructions are further adapted to collect (101, 102), when the program is executed on the programmable device, information on at least one of the following:
a circumstance of a creation of at least one of the plurality of items and
a circumstance of an access to at least one of the plurality of items.

11. A software program for retrieving item information, the software program comprising instructions for performing the step of collecting (110) metadata about a plurality of items,
**characterized in that** the software program further comprises instructions for collecting (101, 102) information on at least one of the following:
a circumstance of a creation of at least one of the plurality of items and
a circumstance of an access to at least one of the plurality of items.
